# EUROPEAN PATENT APPLICATION

(11) **EP 3 388 669 A1**
(43) Date of publication of application: **17.10.2018**
(21) Application number: 17744366.0
(22) Date of filing: 27.01.2017
(51) Int. Cl.: F04B 41/02, B01J 4/00, F17C 5/06

(54) **GAS SUPPLY DEVICE AND METHOD FOR STOPPING OPERATION OF GAS SUPPLY DEVICE**

(30) Priority: 29.01.2016 JP 2016015399
(71) Applicant: Kabushiki Kaisha Kobe Seiko Sho (Kobe Steel, Ltd.), Kobe-shi, Hyogo 651-8585 (JP)
(72) Inventor: HASHIMOTO, Koichiro, Hyogo 676-8670 (JP); FUJISAWA, Akitoshi, Kobe-shi, Hyogo 651-2271 (JP); FUKUDA, Takayuki, Hyogo 676-8670 (JP); WADA, Daisuke, Hyogo 676-8670 (JP); UBA, Takuro, Hyogo 676-8670 (JP); NAGURA, Kenji, Hyogo 676-8670 (JP)
(74) Representative: TBK
(86) International application number: PCT/JP2017/002870
(87) International publication number: WO 2017/131136

(57) **Abstract**

A gas supply device (2) includes a compressor (22) for compressing gas, an in-flow side flow passage (211) having a buffer tank (211c) for storing the gas and linked to the compressor (22), an in-flow side on-off valve (212) for opening and closing the in-flow side flow passage (211) on an portion of the in-flow side flow passage (211) upstream of the buffer tank (211c), an out-flow side flow passage (231) linked to a discharge side of the compressor (22), and a control unit (28) for executing a control to close the in-flow side on-off valve (212) upon receipt of a stop signal for the compressor (22).

## Description

### TECHNICAL FIELD

The present invention relates to a gas supply device and a method for stopping an operation of the gas supply device.

### BACKGROUND ART

In recent years, vehicles utilizing hydrogen gas such as fuel cell vehicles and hydrogen vehicles have been developed and, along with this, the development of a hydrogen gas supply device for filling hydrogen gas into a tank of such a vehicle has also been advanced. An example of such a hydrogen gas supply device is disclosed in patent literature 1. The hydrogen gas supply device described in patent literature 1 includes a compressor for compressing hydrogen gas supplied from a water electrolyzer, a buffer tank for storing the hydrogen gas between the water electrolyzer and the compressor, a hydrogen storage container for storing the hydrogen gas compressed in the compressor, a bypass line linked to a flow passage between the buffer tank and the hydrogen storage container to detour the compressor, and a pressure regulating valve mounted in the bypass line.

In the hydrogen gas supply device described in patent literature 1, the hydrogen gas generated in the water electrolyzer is received by the buffer tank, and the hydrogen gas in this buffer tank is compressed by the compressor and stored in the hydrogen storage container. At this time, by linking the flow passage on a suction side of the compressor and the flow passage on a discharge side of the compressor via the bypass line, a pressure disturbance on the suction side of the compressor is controlled. Then, the hydrogen gas stored in the hydrogen storage container is supplied to a tank of a vehicle or the like from the hydrogen storage container.

In the hydrogen gas supply device described in patent literature 1, the hydrogen gas remains inside the compressor while the compressor is being driven. This hydrogen gas is discharged to the discharge side of the compressor when the compressor is stopped. If the pressure regulating valve is fully opened at the same time as the compressor is stopped, the hydrogen gas discharged from the compressor is temporarily stored in the buffer tank. In this way, the hydrogen gas is utilized without being wasted when the compressor is started next time.

The pressure on the suction side of the compressor is desirably maintained at or below a predetermined pressure also when the compressor is stopped. Thus, a volume of the buffer tank needs to be set such that the hydrogen gas in the compressor can be stored when the compressor is stopped and the pressure on the suction side of the compressor can be maintained at or below the predetermined pressure. Thus, the hydrogen gas supply device including the buffer tank may be enlarged.

### CITATION LIST

### PATENT LITERATURE

Patent Literature 1: Japanese Unexamined Patent Publication No. 2004-121418

### SUMMARY OF INVENTION

The present invention aims to provide a hydrogen gas supply device capable of realizing miniaturization and a method for stopping an operation of the hydrogen gas supply device.

A gas supply device according to one aspect of the present invention includes a compressor for compressing gas, an in-flow side flow passage having a buffer tank for storing the gas and linked to the compressor, an in-flow side on-off valve for opening and closing the in-flow side flow passage on a portion of the in-flow side flow passage upstream of the buffer tank, an out-flow side flow passage linked to a discharge side of the compressor, and a control unit for executing a control to close the in-flow side on-off valve upon receipt of a stop signal for the compressor.

A method for stopping an operation of a gas supply device according to one aspect of the present invention is a method for stopping an operation of a gas supply device with a compressor for compressing gas, an in-flow side flow passage having a buffer tank for storing the gas and linked to the compressor, an in-flow side on-off valve for opening and closing the in-flow side flow passage on a portion of the in-flow side flow passage more distant from the compressor than the buffer tank, and an out-flow side flow passage linked to a discharge side of the compressor, wherein a control to stop the compressor is started at the same time as or after the in-flow side on-off valve is closed.

### BRIEF DESCRIPTION OF DRAWINGS

FIG. 1 is a schematic diagram showing the configuration of a gas supply device according to a first embodiment of the present invention,
FIG. 2 is a flow chart showing an operation stopping procedure of the gas supply device according to the first embodiment,
FIG. 3 is a chart showing a relationship between an elapsed time after an in-flow side on-off valve is closed and a pressure on a suction side of a compressor,
FIG. 4 is a flow chart showing an operation stopping procedure of a gas supply device according to a second embodiment of the present invention, and
FIG. 5 is a schematic diagram showing the configuration of a gas supply device according to a third embodiment of the present invention.

### DESCRIPTION OF EMBODIMENTS

Hereinafter, embodiments of the present invention are described with reference to the drawings. In each figure to be referred to below, out of constituent elements of hydrogen stations 10 according to these embodiments, only main constituent elements are shown in a simplified manner for the convenience of description. Thus, the hydrogen stations 10 according to these embodiments can include any arbitrary constituent element not shown in the respective drawings to be referred to in this specification.

### (First Embodiment)

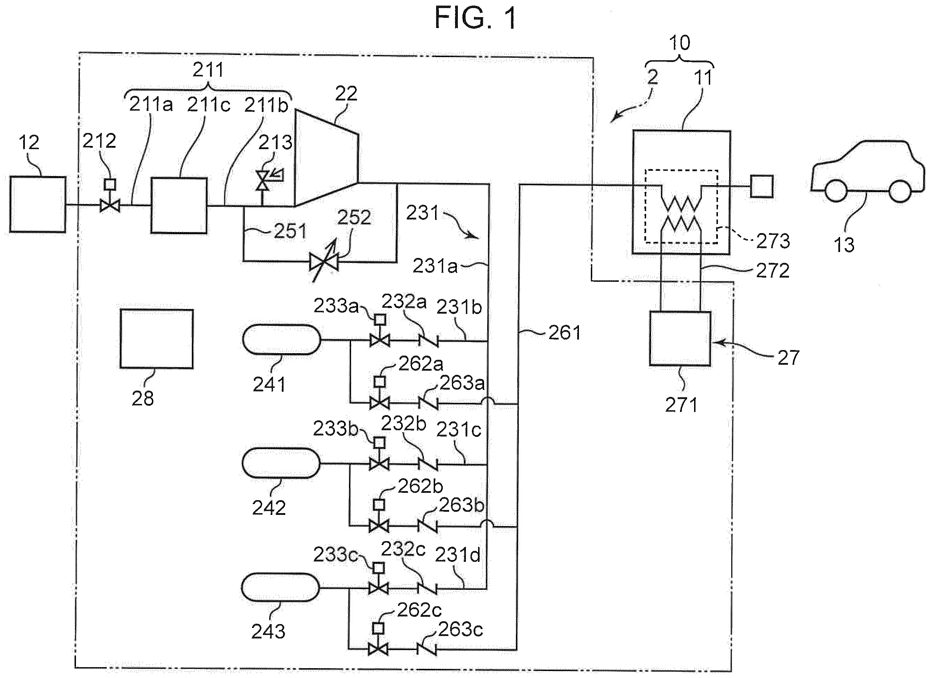

FIG. 1 is a diagram schematically showing the configuration of a hydrogen station 10 according to a first embodiment of the present invention. The hydrogen station 10 includes a gas supply device 2 and a dispenser 11 which is filling equipment.

The gas supply device 2 generates compressed gas by compressing hydrogen gas and supplies the compressed gas to the dispenser 11. In this embodiment, as shown in FIG. 1, hydrogen gas produced in a gas producing device 12 is supplied to the gas supply device 2, and this hydrogen gas is compressed to generate the compressed gas.

Note that a supply source for supplying the hydrogen gas to the gas supply device 2 may not be the gas producing device 12. For example, hydrogen gas may be supplied to the gas supply device 2 from a tank storing the hydrogen gas.

Further, although the gas producing device 12 for producing the hydrogen gas and supplying the hydrogen gas to the gas supply device 2 shows an example in which the gas supply device 2 is a constituent element of the hydrogen station 10, there is no limitation to this. The gas producing device 12 may be a device for producing liquefied gas other than hydrogen gas or may be a device for producing gas other than liquefied gas. Specifically, the gas supply device may be a device for supplying gas other than hydrogen gas.

Further, although the gas producing device 12 is a device independent of the hydrogen station 10 in this embodiment, there is no limitation to this. The hydrogen station 10 may include the gas producing device 12.

The dispenser 11 is equipment for receiving the hydrogen gas supplied from the gas supply device 2. The hydrogen gas is filled into a tank of a vehicle 13 in the hydrogen station 10 through the dispenser 11. Specifically, the dispenser 11 is filling equipment for filling gas into a tank installed in a tank-mounted device such as the vehicle 13. The vehicle 13 is, for example, a fuel cell vehicle.

The gas supply device 2 includes an in-flow side flow passage 231, an in-flow side on-off valve 212, a safety valve 213, a compressor 22, an out-flow side flow passage 231, check valves 232a to 232c, out-flow side on-off valves 233a to 233c, accumulators 241 to 243, a spill-back flow passage 251, a spill-back on-off valve 252, a supply passage 261, on-off valves 262a to 262c, check valves 263a to 263c, a cooler unit 27 and a control unit 38. The respective constituent members are described one after another below.

The in-flow side flow passage 211 is a flow passage into which the hydrogen gas produced in the gas producing device 12 flows. The in-flow side flow passage 211 includes a first flow passage 211a, a second flow passage 211b and a buffer tank 211c. The first flow passage 211a links the gas producing device 12 and the buffer tank 211c. Further, the second flow passage 211b links the buffer tank 211c and a suction side part of the compressor 22. The buffer tank 211c has a larger volume than the first and second flow passages 211a, 211b and can temporarily store the hydrogen gas flowing into the in-flow side flow passage 211.

The in-flow side on-off valve 212 is a valve for starting and stopping the supply of the hydrogen gas from the gas producing device 12 to the compressor 22. The in-flow side on-off valve 212 is mounted on the first flow passage 211a located closer to the gas producing device 12 than the buffer tank 211c. The in-flow side on-off valve 212 can open and close the first flow passage 211a.

The safety valve 213 is a pressure reducing valve for maintaining a pressure on a suction side of the compressor 22 at or below a predetermined pressure. In this embodiment, the safety valve 213 is linked to the second flow passage 211b. The safety valve 213 releases the hydrogen gas flowing in the second flow passage 211b to outside if a pressure in the second flow passage 211b exceeds the predetermined pressure.

The compressor 22 generates the compressed gas by compressing the hydrogen gas flowing thereinto from the suction side part. The compressor 22 includes, for example, a motor and a compression unit, and the compression unit driven according to the rotation of the motor sucks the hydrogen gas in the in-flow side flow passage 211. Note that the compressor 22 may be a screw compressor or a compressor of another type.

The out-flow side flow passage 231 is a flow passage for feeding the compressed gas of the hydrogen gas generated in the compressor 22 to the accumulators 241 to 243. The out-flow side flow passage 231 includes a common passage 231a and individual passages 231b to 231d. The common passage 231a is linked to a discharge side part of the compressor 22. The individual passages 231b to 231d respectively link the common passage 231a and the accumulators 241 to 243 to be described later. The hydrogen gas discharged from the compressor 22 and fed to the accumulators 241 to 243 through the common passage 231a and the individual passages 231b to 231d is temporarily stored in each of the accumulators 241 to 243.

The check valves 232a to 232c are valves for impeding a back flow of the hydrogen gas stored in the accumulators 241 to 243 to the compressor 22. The check valves 232a to 232c are respectively mounted in the individual passages 231b to 231d.

The out-flow side on-off valves 233a to 233c are valves for switching a supply destination of the hydrogen gas discharged from the compressor 22 to any one of the accumulators 241 to 243. The out-flow side on-off valves 233a to 233c are respectively mounted in the individual passages 231b to 231d and located closer to the accumulators 241 to 243 than the check valves 232a to 232c. The out-flow side on-off valves 233a to 233c can open and close the individual passages 231b to 231d.

The accumulators 241 to 243 are containers capable of storing the hydrogen gas inside. The accumulators 241 to 243 are respectively designed to have the same design pressure (e.g. 82 MPa). Note that although the gas supply device 2 includes three accumulators 241 to 243 in this embodiment, there is no limitation to this and the number of the accumulators is arbitrary.

The spill-back flow passage 251 is a flow passage for regulating a pressure difference between the in-flow side flow passage 211 on the suction side of the compressor 22 and the out-flow side flow passage 231 on the discharge side of the compressor 22. The spill-back flow passage 251 links the second flow passage 211b and the common passage 231a to detour the compressor 22.

Note that the spill-back flow passage 251 may be linked to the in-flow side flow passage 211 and the out-flow side flow passage 231 to detour the compressor 22 between the in-flow side on-off valve 212 and the check valves 232a to 232c. Thus, the spill-back flow passage 251 may be linked to the buffer tank 211c on the suction side of the compressor 22 or may be linked to a part of the first flow passage 211a between the in-flow side on-off valve 212 and the buffer tank 211c. Further, the spill-back flow passage 251 may be linked to parts of the individual passages 231b to 231d closer to the compressor 22 than the check valves 232a to 232c on the discharge side of the compressor 22.

The spill-back on-off valve 252 is a valve for regulating an opening of the spill-back flow passage 251, and mounted on the spill-back flow passage 251. Specifically, the spill-back on-off valve 252 is an opening regulating valve capable of regulating the opening of the spill-back flow passage 251 between fully open and fully closed.

The supply passage 261 is a flow passage for feeding the hydrogen gas stored in the first to fourth accumulators 241 to 243 to the dispenser 11. The supply passage 261 includes a plurality of individual paths leading to parts of the individual passages 231b to 231d closer to the accumulators 241 to 243 than the check valves 232a to 232c and a common path having each individual path linked thereto and linked to the dispenser 11.

The on-off valves 262a to 262c are valves for selecting from which of the accumulators 241 to 243 the hydrogen gas will be supplied to the dispenser 11. The on-off valves 262a to 262c are mounted on the respective individual paths of the supply passage 261 and can open and close the respective individual paths.

The check valves 263a to 263c are valves for impeding a back flow of the hydrogen gas supplied to the dispenser 11 to the accumulators 241 to 243. The check valves 263a to 263c are mounted on parts of the respective individual paths 231b to 231d of the supply passage 261 closer to the dispenser 11 than the on-off valves 262a to 262c.

The cooler unit 27 cools the hydrogen gas supplied to the dispenser 11. The cooler unit 27 includes a refrigerator 271, a brine flow passage 272 and a heat exchanger 273. Note that the inside of the refrigerator 271 is not shown and is represented by a rectangle in FIG. 1. In this embodiment, as shown in FIG. 1, the heat exchanger 273 is built in the dispenser 11 and the brine flow passage 272 is configured to be linked to the refrigerator 271 and the heat exchanger 273. The hydrogen gas supplied to the dispenser 11 through the supply passage 261 is cooled by a refrigerant flowing in the brine flow passage 272 in the heat exchanger 273. Then, the refrigerant heated by heat exchange with the hydrogen gas is cooled in the refrigerator 271.

The control unit 28 includes, for example, a MPU or the like composed of unillustrated CPU, ROM, RAM, EEPROM and the like, and executes the following various controls by implementing a program stored in the ROM. Note that although the control unit 28 is represented by one rectangle for the convenience of description in FIG. 1, means for realizing functions of the control unit 28 is arbitrary and all the functions of the control unit 28 may not be realized by one constituent element.

The control unit 28 executes an open/close control of the in-flow side on-off valve 212, executes a drive control of the compressor 22 and executes open/close controls of the out-flow side on-off valves 233a to 233c, the opening regulating valve 252 and the on-off valves 262a to 262c.

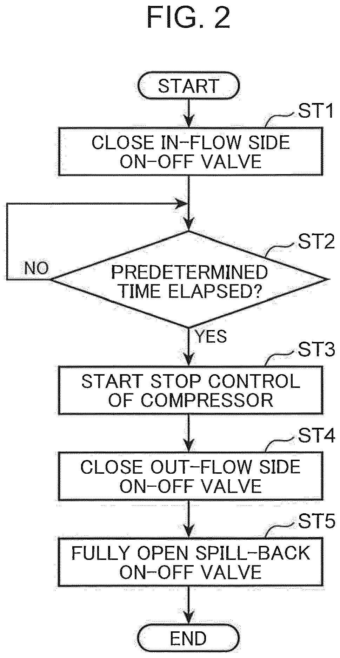

Here, a procedure of stopping an operation of the gas supply device 2 is described with reference to FIG. 2 in addition to FIG. 1.

In this embodiment, it is assumed that the compressor 22 is being driven and the compressed hydrogen gas is supplied to the accumulator 241 out of the accumulators 241 to 243 at a start point shown in FIG. 2. Thus, at the start point shown in FIG. 2, the in-flow side on-off valve 212 and the out-flow side on-off valve 233a are open and the out-flow side on-off valves 233b, 233c are closed. Note that the hydrogen gas is sufficiently stored in the accumulators 242, 243 at the start point shown in FIG. 2.

As the compressor 22 is driven, the compressed hydrogen gas is supplied to the accumulator 241 and a sufficient amount of the hydrogen gas is stored in this accumulator 241, whereby the sufficient amount of the hydrogen gas is stored in all the accumulators 241 to 243. If this state is detected by an unillustrated pressure detector, the control unit 28 receives a stop signal for stopping the compressor 22 from this pressure detector.

Upon receipt of the stop signal, the control unit 28 executes a control to close the in-flow side on-off valve 212 (Step ST1). In this way, the in-flow side on-off valve 212 is closed and the supply of the hydrogen gas from the gas producing device 12 to the compressor 22 is cut off.

The control unit 28 having executed the close control of the in-flow side on-off valve 212 in Step ST1 executes no other control until a predetermined time t₁ elapses after this close control (No in Step ST2) and starts the stop control of the compressor 22 (Step ST3) after the lapse of the predetermined time t₁ (Yes in Step ST2). The compressor 22 controlled to be stopped continues to be driven while gradually weakening the rotation of the motor, and completely stops when a time t₂ elapses after the start of the stop control.

The control unit 28 having started the stop control of the compressor 22 in Step ST3 executes a close control to close the out-flow side on-off valve 233a (Step ST4). In this way, the out-flow side on-off valve 233a is closed and a back flow of the hydrogen gas from the accumulator 241 to the compressor 22 is completely cut off.

The control unit 28 having executed the close control to close the out-flow side on-off valve 233a in Step ST4 executes an opening regulation control to fully open the spill-back on-off valve 252 (Step ST5). In this way, the spill-back flow passage 251 is completely opened and the hydrogen gas flows from the discharge side to the suction side of the compressor 22 through the spill-back flow passage 251, whereby the pressures on the discharge side and the suction side are equalized and the operation of the gas supply device 2 is completely stopped.

Note that since the check valve 232a is provided in the flow passage linking the compressor 22 and the accumulator 241 in this embodiment, the hydrogen gas does not flow back from the accumulator 241 to the compressor 22 even if the spill-back on-off valve 252 is opened with the out-flow side on-off valve 233a kept open. Thus, Step ST4 may be performed simultaneously with or after Step ST5 or may be omitted.

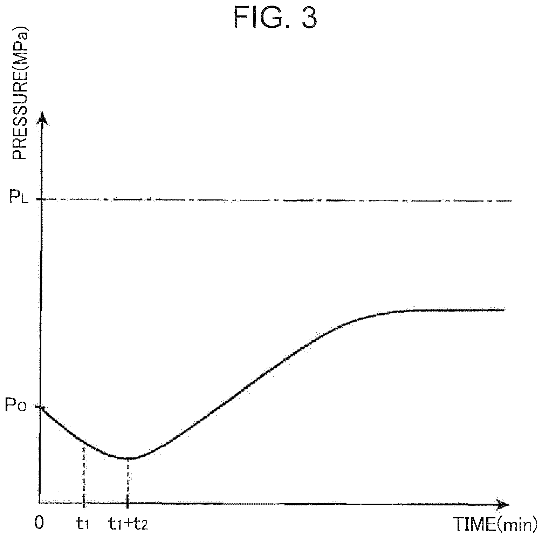

Here, a relationship between an elapsed time after the closing of the in-flow side on-off valve 212 and a gas pressure on the suction side of the compressor 22 is shown in FIG. 3. The pressure on the suction side of the compressor 22 before the in-flow side on-off valve 212 is closed is a pressure Po. Immediately after the in-flow side on-off valve 212 is closed, the supply of the hydrogen gas to the compressor 22 is cut off, whereas the compressor 22 discharges part of the hydrogen gas remaining in the compressor 22, the second flow passage 211b and the buffer tank 211c to the discharge side. In this way, the pressure on the suction side of the compressor 22 is gradually reduced.

Thereafter, when the predetermined time t₁ elapses, the stop control of the compressor 22 is started. Since the time t₂ is required until the rotation of the motor of the compressor 22 completely stops, the pressure on the suction side of the compressor 22 continues to be reduced until a time t₁+t₂ elapses after the closing of the in-flow side on-off valve 212.

When the time t₁+t₂ elapses, the compressor 22 completely stops and the spill-back on-off valve 252 is fully opened, the hydrogen gas flows from the discharge side to the suction side of the compressor 22 through the spill-back on-off valve 252, whereby the pressure on the suction side gradually increases. At a point of time when the pressures on the suction side and the discharge side of the compressor 22 are equalized, the pressure on the suction side is stabilized. The volume of the buffer tank 211c is set such that the pressure on the suction side of the compressor 22 when being stabilized is lower than a predetermined pressure P_{L}.

As described above, in the gas supply device 2 according to this embodiment, the control unit 28 executes the control to close the in-flow side on-off valve 212 upon receipt of the stop signal for the compressor 22. Here, since the predetermined time t₂ is required until the compressor 22 completely stops after receipt of the stop signal, the in-flow side on-off valve 212 is closed before the compressor 22 completely stops. Specifically, in the gas supply device 2, the compressor 22 continues to be driven for a while with the supply of the hydrogen gas to the in-flow side flow passage 211 stopped by closing the in-flow side on-off valve 212. Thus, at least part of the hydrogen gas remaining in the compressor 22 is discharged to the out-flow side flow passage 211. Thus, after the compressor 22 completely stops, the amount of the hydrogen gas flowing from the compressor 22 into the buffer tank 211c provided downstream of the in-flow side on-off valve 212 can be reduced. Therefore, even without using the buffer tank 211 having an extremely large volume, the remaining hydrogen gas can be stored in the buffer tank 211c while the pressure on the suction side of the compressor 22 is maintained at or below the predetermined pressure P_{L} and the miniaturization of the gas supply device 2 can be realized.

Further, since the control unit 28 starts the stop control of the compressor 22 after the predetermined time t₁ elapses following the closing of the in-flow side on-off valve 212 in the gas supply device 2, the time t₁ + t₂ is required until the compressor 22 completely stops after the in-flow side on-off valve 212 is closed. Thus, part of the hydrogen gas remaining in the compressor 22, the second flow passage 211b and the buffer tank 211c can be more reliably discharged to the supply passage 261 on the discharge side after the in-flow side on-off valve 212 is closed.

Further, in the gas supply device 2, the control unit 28 executes the control to open the spill-back on-off valve 252 after closing the in-flow side on-off valve 212. In this way, the pressures on the suction side and the discharge side of the compressor 22 are equalized, whereby the pressure on the suction side of the compressor 22 is kept at a fixed pressure value immediately after the compressor 22 completely stops. Thus, it can be suppressed that the pressure on the suction side of the compressor 22 slowly increases and is kept at a fixed pressure value after the lapse of a long time after the compressor 22 completely stops. In this way, judgment as to whether or not the pressure on the suction side of the compressor 22 is higher than the predetermined pressure can be made immediately after the compressor 22 stops.

Furthermore, in the gas supply device 2, the control unit 28 executes the control to close the out-flow side on-off valve 233a before opening the spill-back on-off valve 252. Thus, a back flow of the hydrogen gas stored in the accumulator 241 when the spill-back on-off valve 252 is opened can be reliably prevented.

Note that although the control unit 28 executes the open/close control of each valve and the stop control of the compressor 22 upon receipt of the stop signal for the compressor 22 in this embodiment, there is no limitation to this. For example, these control steps performed by the control unit 28 may be manually performed by an operator. In this case, the gas supply device 2 includes an operation stop switch for starting the stop control of the compressor 22 and the operator manually executes the open/close control of each valve and the stop control of the compressor by the input of an operation switch in accordance with the flow of FIG. 2.

Although the control is executed to close the out-flow side on-off valve 233a before the spill-back on-off valve 252 is opened in this embodiment, there is no limitation to this. A control may be executed to close the out-flow side on-off valve 233a simultaneously with the opening of the spill-back on-off valve 252.

### (Second Embodiment)

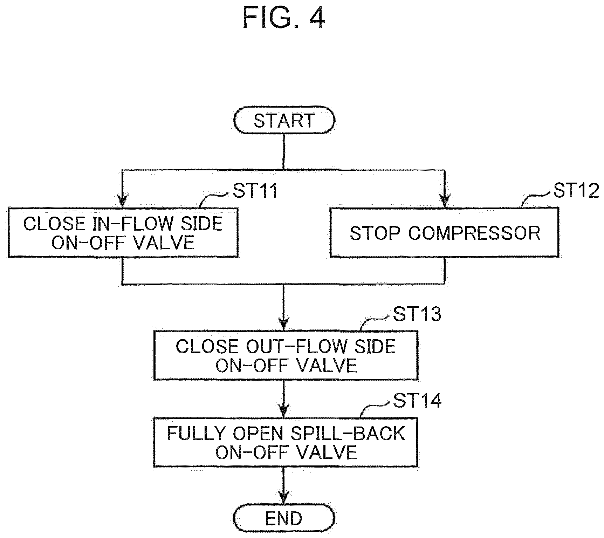

Next, a gas supply device 2 according to a second embodiment is described with reference to FIG. 4. Note that, in this embodiment, only parts different from the first embodiment are described and the same structure, functions and effects as those of the first embodiment are not described.

The gas supply device 2 according to the second embodiment has the same configuration as the gas supply device 2 according to the first embodiment, but differs in the operation stopping method.

In the second embodiment, as shown in FIG. 4, a control unit 28 having received a stop signal for a compressor 22 starts a stop control of the compressor 22 (Step ST12) at the same time as executing a close control to close an in-flow side on-off valve 212 (Step ST11). Thereafter, the control unit 28 executes a close control to close an out-flow side on-off valve 233a (Step ST13) and an opening regulation control to fully open a spill-back on-off valve 252 (Step ST14). In this way, an operation of the gas supply device 2 is completely stopped.

Although the stop control of the compressor 22 is executed simultaneously with the closing of the in-flow side on-off valve 212 in the second embodiment, the compressor 22 controlled to be stopped completely stops while gradually weakening the rotation of a motor. Thus, the compressor 22 is in a driven state until a time t₂ elapses after the closing of the in-flow side on-off valve 212. Thus, the hydrogen gas remaining in the compressor 22, a second flow passage 211b and a buffer tank 211c can be discharged to a supply passage 261 on a discharge side until the compressor 22 completely stops after the in-flow side on-off valve 212 is closed. Therefore, the relatively small buffer tank 211c can be used and the miniaturization of the gas supply device 2 can be realized.

### (Third Embodiment)

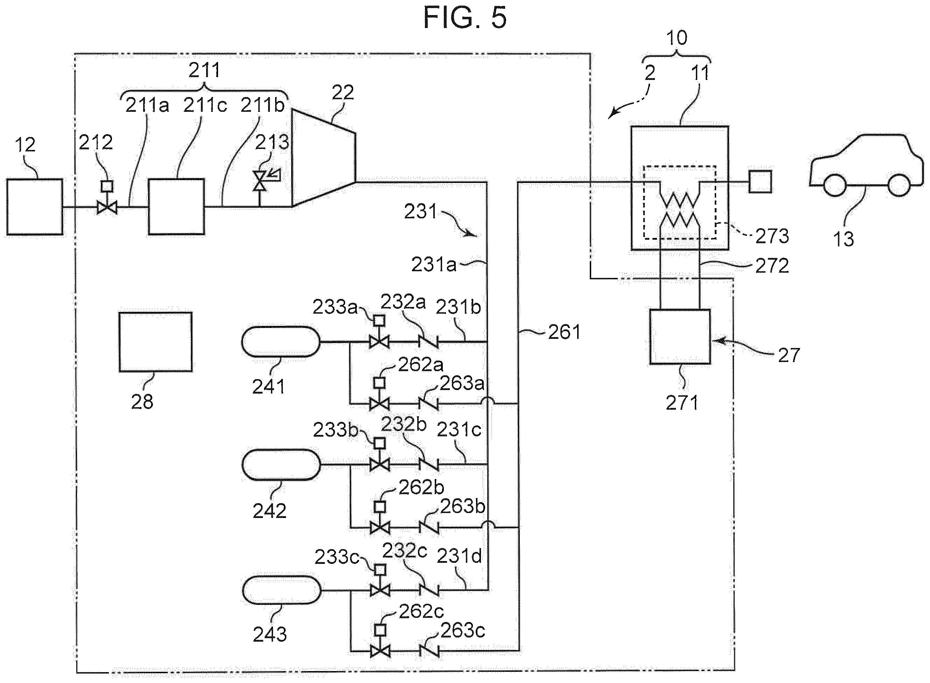

Next, a gas supply device 2 according to a third embodiment is described with reference to FIG. 5. Note that, in this embodiment, only parts different from the first embodiment are described and the same structure, functions and effects as those of the first embodiment are not described.

The gas supply device 2 according to the third embodiment does not include the spill-back flow passage 251 and the spill-back on-off valve 252 unlike the gas supply device 2 according to the first embodiment. Thus, in the gas supply device 2 according to the second embodiment, Step ST5 is unnecessary in the case of stopping the operation in the flow shown in FIG. 2 and Step ST14 is unnecessary in the case of stopping the operation in the flow shown in FIG. 4.

Also in the gas supply device 2 according to the third embodiment, hydrogen gas leaks, for example, from a clearance of a seal of a compressor 22 to a second flow passage 211b when or after the compressor 22 is stopped, whereby the hydrogen gas gradually flows into a buffer tank 211c. In this way, a pressure on a suction side of the compressor 22 increases over time. Thus, as in the first and second embodiments, a stop control of the compressor 22 is started after or simultaneously with the closing of an in-flow side on-off valve 212. In this way, a flow volume of the hydrogen gas flowing into the buffer tank 211c after the compressor 22 completely stops can be reduced. Therefore, the miniaturization of the buffer tank 211c can be realized while the pressure on the suction side of the compressor 22 is maintained at or below a predetermined pressure.

The respective embodiments described above should be considered to be illustrative, but not restrictive in all aspects. The scope of the present invention is defined by appended claims rather than by the description of the above respective embodiments and includes all modifications and variations within the meaning and range of equivalency of the claims.

For example, although the gas supply device 2 includes three accumulators 241 to 243 in the above first to third embodiments, the number of the accumulators is not limited to this and one, four or more accumulators may be provided. Specifically, the number of the accumulators is arbitrary and can be appropriately changed according to a mode of use of the gas supply device 2. For example, in the case of including one accumulator, one out-flow side flow passage 231 and one supply passage 261 are provided.

Here, the embodiments are summarized.
(1) A gas supply device according to the embodiments includes a compressor for compressing gas, an in-flow side flow passage having a buffer tank for storing the gas and linked to the compressor, an in-flow side on-off valve for opening and closing the in-flow side flow passage on a portion of the in-flow side flow passage upstream of the buffer tank, an out-flow side flow passage linked to a discharge side of the compressor and a control unit for executing a control to close the in-flow side on-off valve upon receipt of a stop signal for the compressor.
   In the above gas supply device, the control unit executes the control to close the in-flow side on-off valve upon receipt of the stop signal for the compressor. Here, since the compressor requires a certain time to completely stop after receipt of the stop signal, the in-flow side on-off valve is closed before the compressor completely stops. Specifically, in the above gas supply device, the compressor continues to be driven for a predetermined time with the supply of the gas to the in-flow side flow passage stopped by closing the in-flow side on-off valve. Thus, at least part of the gas remaining in the compressor is discharged toward the out-flow side flow passage. Thus, the amount of the gas in the compressor decreases, wherefore the amount of the gas flowing from the compressor into the buffer tank provided downstream of the in-flow side on-off valve can be reduced after the compressor completely stops. Hence, even without using a buffer tank having an extremely large volume, the remaining gas can be stored in the buffer tank while a pressure on a suction side of the compressor is maintained at or below a predetermined pressure. Therefore, the miniaturization of the gas supply device can be realized.
(2) The above gas supply device may further include a spill-back flow passage linking the in-flow side flow passage and the out-flow side flow passage to detour the compressor between the in-flow side on-off valve and the out-flow side valve member, and a spill-back on-off valve for opening and closing the spill-back flow passage. In this case, the control unit preferably executes a control to open the spill-back on-off valve after closing the in-flow side on-off valve.
   In the above gas supply device, pressures on the suction side and the discharge side of the compressor are equalized by the control unit executing the control to open the spill-back on-off valve after closing the in-flow side on-off valve. Thus, the leakage of the gas from the discharge side to the suction side of the compressor can be suppressed. In this way, the pressure on the suction side of the compressor is kept at a fixed pressure value immediately after the compressor completely stops. Thus, it can be suppressed that the pressure on the suction side of the compressor slowly increases and is kept at the fixed pressure value after the lapse of a long time after the compressor completely stops. In this way, judgment as to whether or not the pressure on the suction side of the compressor is higher than the predetermined pressure can be made immediately after the stop of the compressor.
(3) The above gas supply device may further include an out-flow side on-off valve for opening and closing the out-flow side flow passage. In this case, the control unit preferably executes a control to close the out-flow side on-off valve at the same time as or before opening the spill-back on-off valve.
   In the above gas supply device, the control unit executes the control to close the out-flow side on-off valve at the same time as or before opening the spill-back on-off valve. Thus, a back flow of hydrogen gas when the spill-back on-off valve is opened can be reliably prevented.
(4) A method for stopping an operation of a gas supply device according to the above embodiment is a method for stopping an operation of a gas supply device with a compressor for compressing gas, an in-flow side flow passage having a buffer tank for storing the gas and linked to the compressor, an in-flow side on-off valve for opening and closing the in-flow side flow passage on a portion of the in-flow side flow passage more distant from the compressor than the buffer tank, and an out-flow side flow passage linked to a discharge side of the compressor, wherein a control to stop the compressor is started at the same time as or after the in-flow side on-off valve is closed.
   In the above method for stopping the operation of the gas supply device, the control to stop the compressor is started at the same time as or after the in-flow side on-off valve is closed. In this way, the compressor can continue to be driven for a predetermined time after the supply of the gas to the in-flow side flow passage is stopped. Accordingly, at least part of hydrogen gas remaining in the compressor can be discharged toward the out-flow side flow passage. Thus, the amount of the gas flowing from the compressor into the buffer tank provided downstream of the in-flow side on-off valve can be reduced after the compressor completely stops. Therefore, it is not necessary to use a buffer tank having an extremely large volume, and the miniaturization of the gas supply device can be realized.
(5) In the above method for stopping the operation of the gas supply device, a spill-back on-off valve provided in a spill-back flow passage linking the in-flow side flow passage and the out-flow side flow passage to detour the compressor is preferably opened after the in-flow side on-off valve is closed.
   In the above method for stopping the operation of the gas supply device, the spill-back on-off valve is opened after the in-flow side on-off valve is closed. This causes pressures on a suction side and a discharge side of the compressor to be equalized. In this way, the pressure on the suction side of the compressor is kept at a fixed pressure value immediately after the compressor completely stops. Thus, it can be suppressed that the pressure on the suction side of the compressor slowly increases after the stop of the compressor and is kept at the fixed pressure value after the lapse of a long time. In this way, judgment as to whether or not the pressure on the suction side of the compressor is higher than a predetermined pressure can be made immediately after the compressor completely stops.
(6) In the above method for stopping the operation of the gas supply device, an out-flow side on-off valve provided on the out-flow side flow passage is preferably closed at the same time as or before the spill-back on-off valve is opened.

In the above method for stopping the operation of the gas supply device, the out-flow side on-off valve is closed at the same time as or before the spill-back on-off valve is opened. In this way, a back flow of hydrogen gas stored in an accumulator linked to the out-flow side flow passage when the spill-back on-off valve is opened can be reliably prevented.

As described above, according to the above embodiments, it is possible to provide a hydrogen gas supply device capable of realizing miniaturization and a method for stopping an operation of the hydrogen gas supply device.

## Claims

1. A gas supply device, comprising:
a compressor for compressing gas;
an in-flow side flow passage having a buffer tank for storing the gas and linked to the compressor;
an in-flow side on-off valve for opening and closing the in-flow side flow passage on a portion of the in-flow side flow passage upstream of the buffer tank;
an out-flow side flow passage linked to a discharge side of the compressor; and
a control unit for executing a control to close the in-flow side on-off valve upon receipt of a stop signal for the compressor.

2. A gas supply device according to claim 1, further comprising:
a spill-back flow passage linking the in-flow side flow passage and the out-flow side flow passage to detour the compressor between the in-flow side on-off valve and the out-flow side valve member; and
a spill-back on-off valve for opening and closing the spill-back flow passage;
wherein the control unit executes a control to open the spill-back on-off valve after closing the in-flow side on-off valve.

3. A gas supply device according to claim 2, further comprising:
an out-flow side on-off valve for opening and closing the out-flow side flow passage;
wherein the control unit executes a control to close the out-flow side on-off valve at the same time as or before opening the spill-back on-off valve.

4. A method for stopping an operation of a gas supply device with a compressor for compressing gas, an in-flow side flow passage having a buffer tank for storing the gas and linked to the compressor, an in-flow side on-off valve for opening and closing the in-flow side flow passage on a portion of the in-flow side flow passage more distant from the compressor than the buffer tank, and an out-flow side flow passage linked to a discharge side of the compressor;
wherein a control to stop the compressor is started at the same time as or after the in-flow side on-off valve is closed.

5. A method for stopping an operation of a gas supply device according to claim 4, wherein a spill-back on-off valve provided in a spill-back flow passage linking the in-flow side flow passage and the out-flow side flow passage to detour the compressor is opened after the in-flow side on-off valve is closed.

6. A method for stopping an operation of a gas supply device according to claim 5, wherein an out-flow side on-off valve provided on the out-flow side flow passage is closed at the same time as or before the spill-back on-off valve is opened.
